# EUROPÄISCHE PATENTSCHRIFT

(11) **EP 0 443 699 B1**
(45) Veröffentlichungstag und Bekanntmachung des Hinweises auf die Patenterteilung: **09.10.1996**
(21) Anmeldenummer: 91250044.4
(22) Anmeldetag: 14.02.1991
(51) Int. Cl.: C08L 63/02, G01F 15/14

(54) **Verwendung von Zweikomponenten-Flüssigkunstharz zur Innenauskleidung von Wasserzählern**
Use of liquid synthetic two-component resin for the inner lining of water meters
Utilisation de résine synthétique liquide à deux composants pour le revêtement intérieur de compteurs d'eau

(30) Priorität: 21.02.1990 DE 4005860
(43) Veröffentlichungstag der Anmeldung: 28.08.1991
(73) Patentinhaber: BERLINER WASSER-BETRIEBE EIGENBETRIEB VON BERLIN, 10631 Berlin (DE)
(72) Erfinder: Arndt, Dietmar, W-1000 Berlin 28 (DE); Weiss, Detlef, W-1000 Berlin 19 (DE)
(74) Vertreter: Maikowski, Michael, Dipl.-Ing. Dr.

(56) Entgegenhaltungen:
- WO-A-91/10706
- DE-A- 1 573 049
- DE-B- 2 726 269
- DE-C- 4 165 512
- US-A- 3 929 716
- DR. HANS JAHN "Expoxidharze" 1969, VEB DEUTSCHER VERLAG FÜR GRUNDSTOFFINDUSTRIE, Leipzig, Seiten 22, 23, 45, 47, 218-224, 348, 349
- DVGW-Schriftenreihe Gas/Wasser Nr 12/1987
- DVGW-Schriftenreihe Gas/Wasser Nr 14/91

## Beschreibung

Die Erfindung betrifft die Verwendung von Zweikomponenten-Flüssigkunstharz zur Innenauskleidung von Wasserzählern zur Aufrechterhaltung der Meßbeständigkeit.

Das Gesetz über das Meß- und Eichwesen schreibt eine Eichpflicht zur Gewährleistung der Meßsicherheit der Wasserzähler für den geschäftlichen Verkehr vor. Die Eichfähigkeit von Wasserzählern ist dann und nur dann gegeben, wenn eine ausreichende Meßbeständigkeit erwartet werden kann. Im Betrieb von Haus- sowie Großwasserzählern hat sich nun gezeigt, daß die Meßbeständigkeit durch aus dem Wasser stammende Ablagerungen beeinträchtigt wird, so daß eine kostenaufwendige Auswechselung der Wasserzähler erforderlich ist.

Um diese Kosten, die von der Allgemeinheit getragen werden müssen, zu senken, besteht eine dringende Notwendigkeit die Meßbeständigkeit von Wasserzählern und damit deren Standzeit zu verlängern. Es sind verschiedene Möglichkeiten der Auskleidung von Teilen von Meßeinrichtungen in der Wasserwirtschaft bekannt geworden, doch erbrachten sie für den vorgesehenen Zweck nicht die gewünschten Eigenschaften. So ist aus der DE-OS 15 73 049 bekannt, die Kunststoffauskleidung des Zählgehäuses aus zwei vorgefertigten Spritzgußteilen, nämlich dem Einsatzrohr, das waagerecht im Gehäuse liegt, und dem Einsatzbecher, der senkrecht im Gehäuse liegt, zu fertigen, die mittels einer Montagevorrichtung in die richtige räumliche Lage zueinander und zum Gehäuse gebracht werden. Anschließend wird in den Zwischenraum zwischen den Einsatzteilen und dem Gehäuse ein Gießharz eingegossen.

Diese Art der Kunststoffverkleidung ist sehr aufwendig in ihrer Fertigung. Sie dient der mechanischen Verbindung von Einsatzrohr sowie Einsatzbecher mit dem Gehäuse und trägt nicht zur Aufrechterhaltung der Meßbeständigkeit durch Verhinderung von Ablagerungen bei.

Auch das Auskleidungsmaterial und die Art und Weise der Auskleidung, die durch die DR-Patentschrift 416 512 bekannt geworden sind, erfüllen nicht die Forderungen, die heute an eine Innenauskleidung eines Wasserzählers gestellt werden. Nach der obengenannten Literaturstelle wird der Grundbecher für Flüssigkeitsmesser mit einem Innenfutter, das aus Zelluloid, Kautschuk, Kondensationsprodukten des Phenols besteht, versehen.

Der Erfindung liegt die Aufgabe zugrunde, eine Möglichkeit zur Verfügung zu stellen, mit der die Meßbeständigkeit und damit die Standzeit von Wasserzählern verlängert werden kann.

Überraschenderweise hat sich gezeigt, daß diese Aufgabe dadurch gelöst wird, daß die Innenwandungen der Wasserzählergehäuse mit einem Zweikomponenten-Flüssigkunstharz bestehend aus einem bei Raumtemperatur flüssigen Epoxidharz aus Epichlorhydrin und Bisphenol A bzw. Bisphenol F und inerten Füllstoffen, Pigmenten und Thixotropierungsmitteln und bei Raumtemperatur flüssigen formulierten Polyaminen mit inerten Füllstoffen, Pigmenten und Thixotropierungsmitteln beschichtet sind.

Diese Beschichtung trocknet durch Polyaddition der beiden vorstehend aufgeführten reaktiven Bestandteile.

Überraschend hat sich gezeigt, daß durch diese Beschichtung die Innenkorrosion sowie Inkrustation verhindert werden. Dadurch wird eine Erhöhung der Standzeit und damit eine Verlängerung der Meßbeständigkeit der Wasserzähler erreicht.

Untersuchungen haben ergeben, daß diese Beschichtung, die mit dem Lebensmittel Nr. 1, dem Wasser in Berührung kommt, mikrobiologisch unbedenklich ist.

## Patentansprüche

1. Verwendung von Zweikomponenten-Flüssigkunstharz zur Innenauskleidung von Wasserzählern bestehend aus
einem bei Raumtemperatur flüssigen Epoxidharz aus Epichlorhydrin und Bisphenol A bzw. Bisphenol F und inerten Füllstoffen, Pigmenten und Thixotropierungsmitteln
und
bei Raumtemperatur flüssigen formulierten Polyaminen mit inerten Füllstoffen, Pigmenten und Thixotropierungsmitteln.

## Claims

1. The use of dual-component liquid artificial resin for the internal lining of water meters, consisting of:
an epoxy resin which is liquid at room temperature made of epichlorhydrine and bisphenol A / bisphenol F and inert fillers, pigments and thixotropic agents
and
formulated polyamines which are liquid at room temperature, with inert fillers, pigments and thixotropic agents.

## Revendications

1. Application pour le revêtement intérieur de compteurs d'eau
d'une résine synthétique liquide à deux composants consistant en:
une résine époxydique liquide à température ambiante constituée d'épichlorhydrine et de bisphénol A et/ou bisphénol F et contenant des charges inertes, pigments et agents de thixotropie
et
en polyamines formulées liquides à température ambiante et contenant des charges inertes, pigments et agents de thixotropie.
